(19) Europäisches Patentamt
European Patent Office
Office européen des brevets

(11) **EP 4 488 860 A1**

(12) **DEMANDE DE BREVET EUROPEEN**

(43) Date de publication:
**08.01.2025 Bulletin 2025/02**

(21) Numéro de dépôt: **23184219.6**

(22) Date de dépôt: **07.07.2023**

(51) Classification Internationale des Brevets (IPC):
**G06F 21/55** (2013.01)   **H04L 9/40** (2022.01)

(52) Classification Coopérative des Brevets (CPC):
**H04L 63/1491; G06F 21/554;** G06F 2221/2127

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(71) Demandeurs:
• **Electricité de France**
  **75008 Paris (FR)**
• **Institut Mines-Telecom**
  **91120 Palaiseau (FR)**

(72) Inventeurs:
• **BALLOT, Gabriel**
  **75014 PARIS (FR)**
• **LAAROUCHI, Youssef**
  **78280 GUYANCOURT (FR)**
• **MALVONE, Vadim**
  **91940 LES ULIS (FR)**
• **LENEUTRE, Jean**
  **75018 PARIS (FR)**

(74) Mandataire: **Regimbeau**
  **20, rue de Chazelles**
  **75847 Paris Cedex 17 (FR)**

Remarques:
Revendications modifiées conformément à la règle 137(2) CBE.

(54) **VERIFICATION DE L'ADEQUATION D'UN LEURRE INFORMATIQUE VIS-A-VIS D'UN OBJECTIF POUR SON DEPLOIEMENT SUR UN SYSTEME INFORMATIQUE**

(57) L'invention concerne un procédé de vérification de l'adéquation d'un leurre informatique vis-à-vis d'un objectif, pour son déploiement sur un système informatique, ledit leurre étant prévu pour adopter un comportement adaptatif en fonction d'un attaquant du système informatique, et le procédé comportant :

- une étape de modélisation (S1) du comportement adaptatif du leurre sous la forme d'un graphe d'états,
- une étape de spécification (S2) de l'objectif, sous la forme d'une équation formelle,
- une étape de vérification (S3) sur la base du graphe d'états et de l'équation formelle

Fig. 2

EP 4 488 860 A1

**Description**

DOMAINE DE L'INVENTION

La présente invention est relative au domaine de la sécurité des systèmes informatiques. Elle concerne plus particulièrement un procédé de vérification de l'adéquation d'un leurre informatique déployé sur un tel système informatique à un objectif souhaité en vue de son déploiement effectif sur ce système informatique.

CONTEXTE DE L'INVENTION

La sécurité des systèmes informatiques, ou cybersécurité, est un domaine déjà ancien mais qui prend une importance croissante, notamment du fait de la dépendance de la vie économique et de la vie personnelle de nombreux utilisateurs de ces systèmes informatiques.

Les risques sont variés, de même que les attaquants potentiels des systèmes informatiques.

Par exemple, certaines entités telles les établissements bancaires font l'objet de nombreuses attaques de leurs systèmes informatiques pour des raisons financière, l'attaquant pouvant rechercher à établir des transactions financières illicites à son bénéfice.

Des sites gouvernementaux peuvent faire l'objet d'attaques à des fins politiques. Plus généralement, l'aspect cyberattaque/cybersécurité fait partie des enjeux considérés dans les dispositifs militaires modernes.

Plus généralement, toute entreprise ou tout acteur disposant d'un système informatique peut faire l'objet d'une cyberattaque.

Du fait de la complexité technique du domaine et de l'expertise de certains attaquants, on peut noter que les plus petites structures investissent moins que les plus grandes structures et se trouvent donc davantage exposées aux risques posés par la cybercriminalité.

Différentes propositions ont été faites pour lutter contre les cyberattaques. Parmi elles, on peut citer les leurres, notamment de type « pot de miel ».

Les pots de miel (ou « honeypot » en anglais) sont des leurres déployés sur un système informatique qui visent un double objectif : d'une part collecter des données sur les techniques d'un attaquant, et d'autre part gagner du temps en détournant l'attaquant des ressources du système informatique vers celles du leurre. Ce gain de temps peut permettre la préparation d'une défense du système informatique avant que l'attaquant finisse éventuellement par considérer ses ressources.

Ces leurres sont typiquement constitués d'un ensemble de ressources du systèmes informatiques qui vont présenter des failles et/ou des centres d'intérêts pour un attaquant, afin de l'attirer et, d'ainsi, de le détourner des ressources importantes du système protégé. Les ressources du leurre peuvent êtes ressources physiques (serveurs, routeurs, etc.), ou logiques (fichiers, base de données, etc.).

Le leurre doit être structuré de façon suffisamment complexe pour que l'attaquant soit amené à interagir substantiellement avec lui : plus l'interaction dure et plus l'attaquant y perd du temp et communique indirectement des informations sur son comportent (c'est-à-dire sur qui il est, ce qu'il cherche, son niveau d'expertise en cybercriminalité, etc.). Le leurre doit également être conçu pour ne pas être trop rapidement détecté par l'attaquant comme étant un leurre.

Les leurres peuvent être caractérisés notamment par un niveau d'interactivité, un niveau d'adaptabilité, leur environnement de déploiement, le type de ressources informatiques et les services implémentés, ainsi qu'expliqué dans Daniel Fraunholz, Marc Zimmermann, Hans D. Schotten, « An adaptive honeypot configuration, deployment and maintenance strategy », in 2017, 19th International Conférence on Advanced Communication Technology (ICACT), 2017, pp. 53-57, DOI : 10.23919/ICACT.2017.7890056.

Le niveau d'interactivité représente la capacité du leurre à interagir avec l'attaquant. Ce niveau peut être faible, lorsqu'uniquement une pile protocolaire de communication est émulée afin d'interagir avec l'attaquant ou fort lorsque des couches OS (système d'exploitation) et applicatives sont implémentées.

Le niveau d'adaptabilité représente la capacité du leurre à s'adapter de façon dynamique. Par exemple, un leurre adaptatif peut scanner son environnement afin d'imiter et se camoufler sans intervention humaine et pour garder l'attaquant le plus longtemps possible connecté.

Plus un leurre possède de hauts niveaux d'interactivité et d'adaptabilité, et moins il est détectable pour un attaquant. En revanche, leur complexité et la plus grande offre de services qu'ils procurent font qu'ils peuvent eux-mêmes devenir des failles et vecteurs d'attaques potentiels.

Il existe des leurres de type « pots de miel » à haute interactivé consistant en un réseau virtuel comportant des vulnérabilités identifiées pour permettre un certain chemin d'attaque attirant l'attaquant. De tels leurres sont par exemple décrits dans l'article précité, ou bien dans Adrian Pauna, Ion Bica, « RASSH - Reinforced Adaptive SSH honeypot », in 2014, 14th International Conférence on Communications (COMM), 2014, pp. 1-6, DOI : 10.1109/ICComm.2014.6866707, ou encore dans Gérard Wagener et al., « Heliza : talking dirty to the attacker », in vol. 7.3, 2011, pp. 221-222, DOI :

10.1007/s11416-010-0150-4.

Ces propositions souffrent de deux inconvénients majeurs : premièrement le chemin d'attaque est statique, par construction, et ne s'adapte donc pas à l'attaque en cours. Deuxièmement, les attaquants experts peuvent faire apparaître des chemins d'attaque imprévus qui peuvent ainsi compromettre le leurre qui devient alors un vecteur d'attaque réel.

Par ailleurs, des outils existent pour permettre à l'attaque de détecter qu'il interagit avec un leurre.

Par exemple, en fonction du niveau d'interactivité, des techniques comme le contrôle d'empreinte du réseau, des services, ou du système d'exploitation peuvent être utilisées afin de déterminer si, du point de vue de l'attaquant, l'autre partie est un système informatique réel ou un leurre.

On voit donc que le développement d'un leurre performant est une entreprise complexe nécessitant que le leurre soit conçu pour répondre à une pluralité d'objectifs.

Une fois un leurre conçu pour un système informatique donné, il est donc crucial de pouvoir vérifier qu'il répond aux objectifs souhaités et précédemment évoqués, notamment de retarder l'attaquant, de collecte de données sur cet attaquant, de ne pas lui permettre de détecter qu'il interagit avec un leurre, et de ne pas fournir lui-même un vecteur d'attaque.

RESUME DE L'INVENTION

Le but de la présente invention est de fournir un dispositif et un procédé palliant au moins partiellement les inconvénients précités.

Plus particulièrement, l'invention vise à vérifier qu'un leurre conçu pour un système informatique répond bien à un ensemble d'objectifs prévus.

A cette fin, la présente invention propose un procédé de vérification de l'adéquation d'un leurre informatique vis-à-vis d'un objectif, pour son déploiement sur un système informatique, ledit leurre étant prévu pour adopter un comportement adaptatif en fonction d'un attaquant dudit système informatique, et ledit procédé comportant :

- une étape de modélisation dudit comportement adaptatif dudit leurre sous la forme d'un graphe d'états,
- une étape de spécification dudit objectif, sous la forme d'une équation formelle,
- une étape de vérification sur la base dudit graphe d'états et de ladite équation formelle.

Il devient ainsi possible de concevoir des leurres complexes et de s'assurer ensuite que celui-ci répond aux objectifs souhaités.

En particulier, il devient possible de concevoir des leurres adaptatifs, et de vérifier que leurs comportements satisfont les objectifs prévus.

Suivant des modes de réalisation préférés, l'invention comprend une ou plusieurs des caractéristiques suivantes qui peuvent être utilisées séparément ou en combinaison partielle entre elles ou en combinaison totale entre elles :

- le graphe d'états a pour transitions des couples d'actions, chaque couple d'actions comprenant une première action représentative du comportement dudit attaquant vis-à-vis dudit leurre, l'autre action représentative d'un comportement dudit leurre ;
- l'équation formelle est exprimée selon un langage formel de type logique temporelle à temps alterné, ATL ;
- le langage formel est adapté pour exprimer des capacités dudit attaquant ;
- l'étape de vérification se base sur un algorithme de programmation dynamique considérant des sous-formules de ladite équation formelle et se basant sur des connaissances pointées représentatives d'un état dudit graphe d'états et des connaissances dudit attaquant, respectivement défendeur, sur les capacités dudit défendeur, respectivement attaquant ;
- le procédé comporte une étape de déploiement dudit leurre ;
- le langage formel obéit à la grammaire suivante :

$$\phi ::== \ell \mid \mathcal{K}^a_{cap}(\varphi) \mid \neg\phi \mid \phi \wedge \phi \mid \langle\, Y\,\rangle\psi$$

$$\psi ::== \mathcal{N}\phi \mid \phi\mathcal{U}\phi \mid \phi\mathcal{R}\phi$$

$$\varphi ::== a \mapsto c \mid \neg\varphi \mid \varphi \wedge \varphi$$

dans laquelle $\ell$ est une proposition atomique, $a$ est un agent $Y$ est une coalition d'agents, lesdits agents pouvant être ledit attaquant ou ledit défendeur, c est une capacité, $\langle . \rangle$ est un opérateur stratégique, $\mathcal{N}$, $\mathcal{U}$, $\mathcal{R}$ sont les opérateurs temporels, respectivement « next », « until » et « release » et $\mathcal{K}_{cap}^{a}(\varphi)$ est un opérateur de connaissance appliqué à une propriété <p sur les capacités desdits agents.

Un autre aspect de l'invention concerne un programme d'ordinateur comportant des instructions pour mettre en oeuvre un procédé tel que précédemment défini lorsque ledit programme est exécuté par un processeur.

Un autre aspect de l'invention concerne des moyens de stockage caractérisés en ce qu'ils stockent un programme d'ordinateur comprenant des instructions pour mettre en oeuvre le procédé tel que précédemment défini, lorsque ledit programme est exécuté par un processeur.

D'autres caractéristiques et avantages de l'invention apparaîtront à la lecture de la description qui suit d'un mode de réalisation préféré de l'invention, donnée à titre d'exemple et en référence aux dessins annexés.

## BREVE DESCRIPTION DES DESSINS

La figure 1 illustre un exemple de système informatique.
La figure 2 représente un exemple d'organigramme d'un procédé selon un mode de réalisation de l'invention.
La figure 3 illustre un exemple très simplifié d'un graphe d'états pouvant modéliser le comportement d'un leurre selon un mode de réalisation de l'invention.
La figure 4 illustre un autre exemple simplifié d'un graphe d'états pouvant modéliser le comportement d'un leurre selon un mode de réalisation de l'invention.

## DESCRIPTION DETAILLEE DE L'INVENTION

L'invention s'applique à tout système informatique susceptible de pouvoir être attaqué à un agent malveillant ou « attaquant ». Cet attaquant peut être une personne physique ou un outil automatique (logiciel) ou, bien sûr, une collaboration entre les deux, les cybercriminels s'aidant généralement de différents outils permettant d'automatiser, et d'accélérer, certaines tâches nécessaires à l'intrusion.

Le procédé proposé s'applique notamment aux systèmes informatiques connectés à un réseau ouvert au public tel que le réseau internet.

Elle s'applique également aux systèmes informatiques non-connectés, par exemple aux réseaux internes à une entreprise ou à une organisation, par exemple.

Un système informatique peut être vu comme un ensemble d'équipements, de logiciels et de données. Ces équipements comprennent notamment des serveurs permettant de stocker des logiciels et des données, et des équipements de réseaux comme des routeurs, des équipements de sécurité (pare-feu ou « firewall » en anglais...), des commutateurs, etc.

Le leurre forme un sous-système intégré ou juxtaposé au système informatique à protéger, formé également d'un ensemble d'équipements et/ou de logiciels et/ou de données.

Ce sous-système peut par exemple être un réseau virtuel déployé au-dessus du système informatique à protéger.

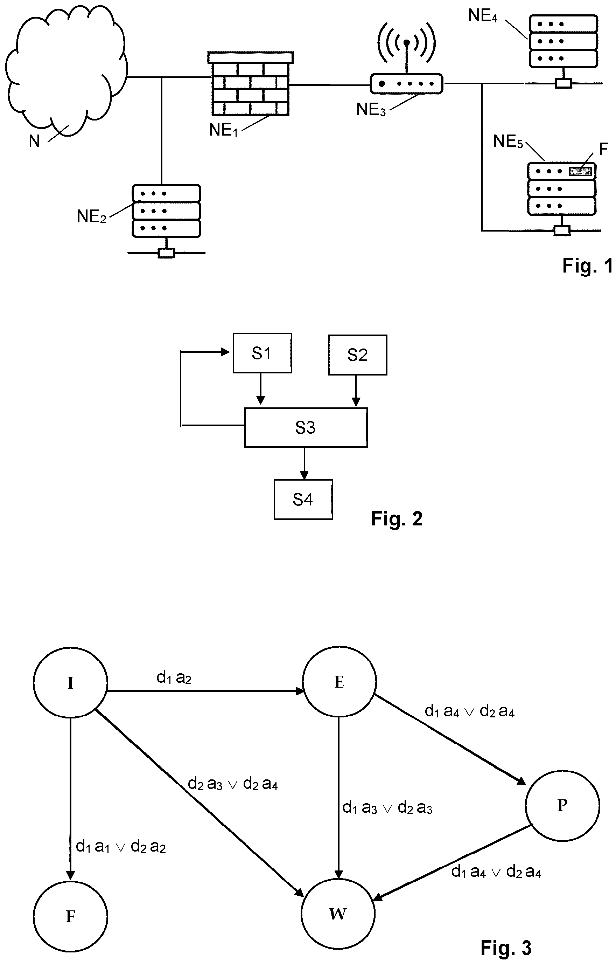

La figure 1 illustre un exemple de système informatique connecté à un réseau ouvert, N.

Ce système informatique comporte un ensemble d'équipements, ou éléments de réseau, $NE_1$, $NE_2$, $NE_3$, $NE_4$, $NE_5$. Parmi ces équipements, il y a un pare-feu $NE_1$, des serveurs $NE_2$, $NE_4$, $NE_5$, un routeur $NE_3$. Sur chaque serveur, on peut trouver des logiciels et des données. Par exemple, dans le cas où ce système informatique est celui d'une entreprise, les données peuvent comprendre des fichiers associés à différents niveaux de sensibilité : certains peuvent être particulièrement sensibles car contenant des données confidentielles sur les projets de l'entreprise, ou contenant des données personnelles (documents du département des ressources humaines, par exemple).

Un leurre peut être déployé, comportant un serveur $NE_1$ et des données F au sein du serveur $NE_5$. Ces données F peuvent par exemple être un fichier intitulé « mots de passe » ou tout autre fichier ou donnée susceptible d'attirer un attaquant.

Le serveur $NE_2$ peut être situé en amont du pare-feu $NE_1$. Ainsi, un attaquant à travers le réseau N pourra immédiatement voir le serveur $NE_2$ et se laisser piéger à explorer cette ressource « facile » avant d'envisager de pénétrer le pare-feu $NE_1$. S'il parvient à pénétrer dans le système informatique au-delà de ce pare-feu, une seconde ressource, par exemple des données F, peut l'attirer et détourner son intension des autres serveurs, $NE_4$, et des autres données et logiciels stockées sur les serveurs $NE_4$, $NE_5$.

Pendant que l'attaquant explore les ressources du leurre, son comportement peut être étudié afin d'en extraire des informations sur son profil et son mode opératoire.

Le leurre peut également comprendre des données de configuration des équipements de réseau. Par exemple, un port particulier d'un équipement, notamment un pare-feu, peut être intentionnellement laissé ouvert afin d'aiguiller l'attaquant dans cette brèche et, conséquemment, le détourner des autres ressources. Plus généralement, des éléments peuvent être configurés pour créer des failles intentionnelles afin de leurrer l'attaquant.

Selon un mode de réalisation, le leurre peut être adaptatif. Un leurre adaptatif peut avoir un comportement dynamique afin de modifier sa structure au cours du temps et en fonction du comportement perçu de l'attaquant. Il peut par exemple changer sa topographie, changer des règles de filtrage, ouvrir/ferme des ports, créer une nouvelle vulnérabilité intentionnelle, etc.

Autrement dit, un tel leurre est donc prévu pour adopter un comportement qui s'adapte en fonction de l'attaquant du système informatique (au travers de son comportement perçu par le leurre).

Les leurres connus de l'état de la technique sont principalement des leurres statiques. En sus des inconvénients mentionnés précédemment, les leurres statiques créent une dissymétrie entre l'attaquant et le défendeur : l'attaquant dispose de tout le temps nécessaire pour rechercher une faille, tandis que le défenseur a un temps très limité pour parer chaque attaque. Ce dernier doit en outre réussir à juguler toutes les attaques alors que l'attaquant n'a besoin de gagner qu'une seule fois.

Pour les inventeurs, il apparaît qu'un leurre adaptatif peut briser cette asymétrie, et ainsi favoriser les défenseurs au détriment des attaquants.

Du fait de la complexité d'un leurre et notamment d'un leurre adaptatif, un processus de conception est mis en oeuvre préalablement à son déploiement, au cours duquel différents scénarios d'attaque sont étudiés.

En particulier, le comportement adaptatif doit être prévu, c'est-à-dire les éléments déclencheurs d'une adaptation et les modalités de cette adaptation (c'est-à-dire ce qui est adapté au sein du leurre).

Chaque système informatique est différent en termes de topologie, de données sensibles à protéger, de typologie d'attaquants potentiels, il n'existe pas de leurre « prêt à l'emploi » qu'il suffirait de plaquer sur le système informatique, mais au contraire, le leurre doit être conçu et précisément adapté à chaque cas d'espèce.

Comme évoqué précédemment, le leurre est conçu afin de remplir un objectif, cet objectif pouvant être constitué d'un ensemble de sous-objectifs.

Une fois conçu, le procédé proposé prévoit une vérification que le leurre conçu remplisse effectivement l'objectif prévu, c'est-à-dire si le leurre est bien en adéquation avec l'objectif.

Une fois cette adéquation vérifiée, le leurre peut être déployé sur le système informatique à protéger. Ce déploiement peut être effectué avec l'assurance que le leurre a bien été conçu pour répondre à l'objectif visé, et que donc il aura le comportement attendu.

Pour ce faire, tant le leurre que l'objectif sont modélisés, et l'étape de vérification est effectuée sur la base des deux modèles.

La vérification proposée permet donc de valider le modèle du leurre, et permet ainsi le déploiement effectif d'un leurre correspondant au modèle validé.

Le modèle validé peut ainsi être directement utilisé pour la mise en place technique des différents éléments du leurre : éléments de réseaux (routeurs, serveurs...), données de configuration, données, logiciels, etc., y compris les outils logiciels permettant l'adaptabilité du leurre.

Le procédé proposé peut être décrit en relation avec la figure 2 qui présente un exemple d'organigramme.

Ce procédé comprend :

- une étape S1 de modélisation du comportement adaptatif dudit leurre sous la forme d'un graphe d'états (qui est une forme de modélisation) ;
- une étape S2 de spécification de l'objectif à remplir pour le leurre, sous la forme d'une équation formelle (qui est une autre forme de modélisation) ;
- une étape S3 de vérification de l'adéquation du leurre par rapport à l'objectif, sur la base du graphe d'états et de l'équation formelle ;
- et éventuellement, une étape S4 de déploiement du leurre ainsi vérifié.

Cette dernière étape peut être effectuée de façon asynchrone : un opérateur en charge de la sécurité du système informatique peut ainsi concevoir et vérifier un ensemble de leurres, dans le but de les déployer, mais ne peut les déployer effectivement que plus tard, en fonction de différents éléments contextuels ou extérieurs : projets de l'entreprise, choix stratégiques, analyse des attaques prévus de cybercriminels, etc.

Les étapes S1 et S2 peuvent ne pas être ordonnées : le leurre peut être modélisé avant, après, ou en parallèle de la modélisation de l'objectif.

En général, si l'étape S3 de vérification n'aboutit pas, c'est-à-dire si le leurre modélisé n'est pas en adéquation avec l'objectif prévu, il peut être prévu de reboucler sur l'étape S1 de modélisation du leurre. Le but est alors de modifier sa conception, afin d'améliorer le leurre en termes d'adéquations aux objectifs.

Le procédé proposé repose sur une modélisation du leurre sous forme de jeu mathématique. Plus précisément, afin de prendre en compte le caractère adaptatif du leurre, une formalisation à double-agent est utilisée. Ces deux agents sont un attaquant et un défendeur représentant le comportement du leurre.

Des tentatives de formalisation d'un jeu mathématique à double agents ont été faites, mais celles-ci ne prennent pas en compte le fait que le profil de l'attaquant est inconnu et que le défendeur cherche à connaître ce profil. Autrement dit, un des objectifs auxquels le leurre doit répondre est de permettre la détermination du profil d'un attaquant, cette capacité influant sur son comportement, par exemple sur une liste d'actions qu'il peut déclencher.

Les capacités ou profil de l'attaquant comprennent un niveau d'expertise mais peuvent aussi comprendre des données sur son contexte : ressources qu'il a à disposition, plateforme utilisée, etc.

Aussi, le procédé proposé repose sur une nouvelle méthodologie de modélisation d'un leurre, que l'on peut appeler « Capacity Concurrent Game Structure » en anglais (structure de jeu concurrent basé sur les capacités).

L'étape S1 de modélisation du comportement adaptatif du leurre consiste à représenter le leurre sous la forme d'un graphe à états.

Ce graphe d'états permet de capturer l'évolution des comportements conjoints de l'attaquant et du leurre.

Selon un mode de réalisation, les transitions entre les états correspondent à des couples d'actions. Chaque couple d'actions comprend une première action représentative du comportement d'un attaquant vis-à-vis dudit leurre, l'autre action représentative d'un comportement du leurre.

La figure 3 illustre un exemple très simplifié d'un graphe d'états pouvant modéliser le comportement d'un leurre.

A chaque instant, le leurre est dans un des états I, F, E, P, W qui seront explicités ultérieurement. Le leurre peut passer dans un nouvel état selon les transitions liants les états entre eux, chaque transition étant associée à une condition qui doit être valide (ou logiquement vraie) pour permettre de son déclenchement et le passage vers l'état correspondant.

Sur la figure 3, les états sont représentés graphiquement par des cercles, et les transitions par des flèches.

Les deux parties (l'attaquant et le leurre) disposent d'un ensemble d'actions possibles qui peut dépendre de son profil, c'est-à-dire de ses capacités. Un des objectifs du leurre peut être de déterminer le profil de l'attaquant.

Les actions possibles pour l'attaquant sont notées $a_1$, $a_2$, $a_3$, $a_4$.

Les actions possibles pour le leurre (ou défendeur) sont notées $d_1$, $d_2$.

Chaque transition comprend donc un couple d'actions $d_i a_j$, formé d'une action $a_j$ représentative du comportement de l'attaquant et l'autre action $d_i$ représentative du comportement du leurre (l'ordre pouvant être inversé).

Le symbole « v » utilisé sur la figure indique un « ou » logique, c'est-à-dire qu'un ou l'autre (ou les deux) des couples d'actions indiqués peuvent valider la transition entre les états correspondants.

Initialement, le leurre est dans l'état « I » (pour « Initial »). De cet état partent 3 transitions vers les états « E », « W » et « F ».

Dans le cas où l'attaquant déploie l'action $a_1$ et le leurre déploie l'action $d_1$, l'attaque échoue, ce qui est modélisé par l'état « F » (pour « Fail » en anglais, ou échec).

Dans le cas où l'attaquant déploie l'action $a_2$ et le leurre déploie l'action $d_2$, l'attaque échoue également, et le leurre passe dans l'état « F ».

Dans le cas où l'attaquant déploie l'action $a_3$ et le leurre déploie l'action $d_2$, ou bien dans le cas où l'attaquant déploie l'action $a_4$ et le leurre déploie l'action $d_2$, l'attaquant gagne et le leurre passe dans l'état correspondant « W » (pour « Win » en anglais).

Dans le cas où l'attaquant déploie l'action $a_2$ et le leurre déploie l'action $d_1$, l'attaque pénètre dans le système informatique et le leurre passe alors dans un état « E » (pour « Enter » en anglais).

A titre d'exemples d'actions $a_1$, $a_2$, $a_3$, $a_4$ pouvant être effectuées par l'attaquant, on peut citer les attaques de collecte d'information (ou « scanning » en anglais), les attaques persistantes, par exemple « APT » (pour « Advanced Persistent Thread » en anglais), les attaques par force brute, etc.

Des bases de données existent référençant les attaques et contremesures. On peut par exemple citer la base maintenue par l'organisme MITRE, disponible à l'adresse : https://attack.mitre.org

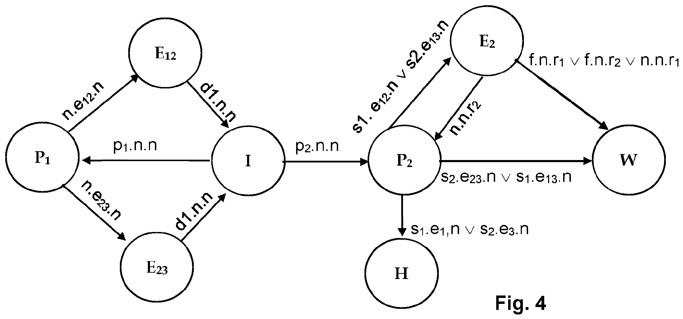

La figure 4 illustre un exemple plus complexe de graphe d'états pouvant modéliser le comportement d'un leurre.

A chaque instant, le leurre est dans un des états I, $E_{12}$, $E_{23}$, $P_2$, $E_2$, H et W qui seront explicités ultérieurement

Dans cet exemple, on considère également l'environnement, de sorte que chaque transition est associée à un couple d'actions attaquant/défendeur, et à une action de l'environnement également.

Dans cet exemple, nous considérons une équipe d'ingénieurs en sécurité qui souhaite concevoir un leurre pour sécuriser le réseau de son entreprise. Ils identifient trois types d'attaquants, désignés par att1, att2 et att3, qui se distinguent par le fait qu'ils maîtrisent des vulnérabilités différentes.

On sait qu'att1 peut exploiter les failles $e_{12}$, $e_{13}$ et $e_1$, tandis qu'att2 maîtrise $e_{12}$ et $e_{23}$, et qu'att3 connaît $e_{13}$, $e_{23}$ et $e_3$.

Précisément, l'équipe conçoit deux machines virtuelles, m1 et m2, avec des vulnérabilités différentes, à savoir vul1 dans m1, et vul2 et vul3 dans m2.

Ils identifient que vul1 souffre des failles (ou « exploits » en anglais) $e_{12}$ et $e_{23}$ qui induisent un état intermédiaire

différent ($E_{12}$ et $E_{23}$ respectivement) dans le système.

De plus, en fonction du service exposé sur m2, la vulnérabilité vul2 peut être directement exploitée par $e_{23}$ si le service est $s_2$ ou $e_{13}$ si le service est $s_1$. La vulnérabilité vul2 souffre également de $e_{12}$ avec le service $s_1$ et de $e_{13}$ avec le service $s_2$.

Cependant, dans les deux derniers cas (appelés failles longues), le système passe dans un état intermédiaire E2 et le succès de la faille dépend du choix de de l'environnement : dans le cas aléatoire $r_1$, l'attaque réussit, et dans le cas $r_2$, l'attaque échoue. Pour éviter ce caractère aléatoire, les ingénieurs permettent au leurre de produire une fausse sortie (désignée par f) pour faire croire à l'attaquant que l'attaque a réussi, quel que soit le choix aléatoire de l'environnement $r_1$ ou $r_2$. Comme mentionné, m2 est également vulnérable à vul3 si le service est $s_1$ (resp. $s_2$) et que l'attaquant utilise la faille avancée $e_1$ (resp. $e_3$). L'exploitation de vul3 est dangereuse pour le système car l'attaquant peut compromettre le leurre et obtenir un accès privilégié (« root ») à la machine hôte. Cela peut être modélisé par l'étiquette « hacked », associée à l'état H.

Enfin, les ingénieurs décident de placer un fichier de mots de passe fictifs dans la machine m2 accessible si les attaquants parviennent à exploiter vul2. Ceci peut être modélisé par l'étiquette « win » associée à l'état W.

Ainsi, nous pouvons formaliser le problème comme un modèle à états à trois agents où le premier agent est le défenseur (D = 1), le deuxième agent est l'attaquant (A = 2), et le troisième agent est l'environnement (E = 3). Le défenseur a deux capacités : F (D) = {recel, honeypot} représentant un système réel ou un honeypot (leurre). L'attaquant a trois capacités F (A) = {atti, att2, att3}, une pour chaque profil d'attaquant, et l'environnement a une capacité unique F(E) = {env}.

Identifions les actions y(c) disponibles pour chaque capacité c dans ce scénario. Pour le défenseur réel y(real) = {$p_1$, $p_2$, $d_1$, $d_2$, $s_1$, $s_2$, n} pour brancher (resp. débrancher) la machine mi avec $p_1$ (resp. $d_1$) et m2 avec $p_2$ (resp. $d_2$), ou pour ne rien faire avec n. Le honeypot a une action supplémentaire f pour produire une fausse sortie et prétendre que les failles longues de vul2 ont réussi quelle que soit l'aléa de l'environnement, c'est à dire, y(honeypot) = {$p_1$, $p_2$, $d_1$, $d_2$, $s_1$, $s_2$, f, n}.

Enfin, y(att1) = {$e_{12}$, $e_{13}$, $e_1$, n} ; y(att2) = {$e_{12}$, $e_{23}$, n}, y(att3) = {$e_{13}$, $e_{23}$, $e_3$, n}, et l'environnement a y(env) = {$r_1$, $r_2$, n}

L'étape S2 de spécification (ou modélisation) de l'objectif repose sur la spécification d'une équation formelle décrivant cet objectif sous une forme à la fois univoque et interprétable par un logiciel et une plateforme de traitement de l'information.

Selon un mode de réalisation, cette équation formelle est exprimée selon un langage formel de type logique temporelle à temps alterné, ATL.

Selon un mode de réalisation, ce langage formel permet d'exprimer des capacités dudit attaquant.

On connaît les logiques temporelle linéaire, LTL (pour « Linear-time Temporal Logic » en anglais) depuis l'article d'Amir Pnueli, "The temporal logic of programs," 18th Annual Symposium on Foundations of Computer Science (sfcs 1977), Providence, RI, USA, 1977, pp. 46-57, doi: 10.1109/SFCS.1977.32.

En logique, la logique temporelle linéaire, LTL, est une logique temporelle modale avec des modalités se référant au temps. En LTL, on peut coder des formules sur l'avenir d'un chemin infini dans un système de transitions, par exemple une condition finira par être vraie, une condition sera vraie jusqu'à ce qu'une autre devienne vraie, etc.

La LTL est construite à partir d'un ensemble fini de variables propositionnelles AP, opérateurs logiques ¬ (négation) et v (ou logique), et des opérateurs temporels modaux X (certaines notations utilisent O ou N) et U. Ces opérateurs permettent d'indiquer des relations temporelles : X est lu comme suivant (« next » en anglais) et U est lu comme jusqu'à (« until » en anglais).

La logique temporelle en temps alterné, ATL a été proposée dans l'article d'Alur, R. and Henzinger Th.A. et Kupferman O., « Alternating-time Temporal Logic », J. ACM, volume 49, number 5, 2002.

Cette logique permet de considérer plusieurs agents qui peuvent former des coalitions et coopérer pour atteindre un certain but.

On peut définir la grammaire de la logique ATL de la façon suivante :

$$\phi ::= \ell \mid \neg\phi \mid \phi \wedge \phi \mid \langle Y \rangle \psi$$

$$\psi ::= \mathcal{N}\phi \mid \phi\mathcal{U}\phi \mid \phi\mathcal{R}\phi$$

Les termes et symboles seront explicités plus loin.

Il est ici proposé d'étendre cette logique ATL afin de prendre en compte le fait que chaque agent (c'est-à-dire ici l'attaquant ou le leurre) peut avoir un profil auquel sont associés des capacités. La logique ATL étendue, appelée CapATL, permet d'exprimer des objectifs portant notamment sur ces capacités : par exemple un objectif peut typiquement être de déterminer les capacités de l'attaquant.

La connaissance de ces capacités permet à l'opérateur du système informatique attaqué d'établir des statistiques, de définir une stratégie à long-terme en fonction de ces statistiques ou, à plus court terme, de réagir à des attaques en cours en prenant en compte ce profil de l'attaquant.

On peut définir la grammaire de la logique CapATL de la façon suivante :

$$\phi ::== \ell \mid \mathcal{K}_{cap}^{a}(\varphi) \mid \neg\phi \mid \phi \wedge \phi \mid \langle\, Y\,\rangle\psi$$

$$\psi ::== \mathcal{N}\phi \mid \phi\mathcal{U}\phi \mid \phi\mathcal{R}\phi$$

$$\varphi ::== a \mapsto c \mid \neg\varphi \mid \varphi \wedge \varphi$$

Dans cette grammaire (ainsi que dans celle de la logique ATL précédemment décrite), on écrit :

- $\ell$, une proposition atomique,
- Y, une coalition (ou ensemble) d'agents,
- *a,* un agent (l'attaquant ou le leurre),
- c, une capacité (par exemple le niveau d'expertise de l'attaquant),
- $\langle\,.\,\rangle$ est l'opérateur stratégique (ainsi, $\langle Y\rangle\psi$ signifie que Y possède une stratégie pour s'assurer de $\varphi$, quel que soit les autres actions des autres agents.
- $\mathcal{N}, \mathcal{U}, \mathcal{R}$ sont les opérateurs temporels, respectivement « next » (prochain), « until » (jusqu'à) et « release » qui est le dual logique de « until »,
- $\mathcal{K}_{cap}^{a}(\varphi)$ est l'opérateur de connaissance sur les capacités des agents, $\mathcal{K}_{cap}^{a}(\varphi)$ signifiant que l'agent *a* sait que la propriété exprimée par <p et portant sur une capacité d'agents est vérifiée. Ainsi, une nouvelle formule d'affectation de capacité est fournie par le langage afin de permettre l'expression de <p. Par exemple, l'expression $\mathcal{K}_{cap}^{a}(a' \mapsto c)$ signifie que l'agent a sait que l'agent a' doit posséder la capacité c.
- Les opérateurs « ¬ », « ∧ » sont les opérateurs logiques binaires communément utilisés (respectivement la négation, et le « et » logique).

Une formule <p de la logique est vraie dans un état Q, dénoté Q ⊨ ($\varphi$, dans les conditions suivantes.

Une formule $\ell$ est vérifiée dans un état qui possède cette étiquette $\ell$,

Une formule $\mathcal{K}_{cap}^{a1}(a2 \mapsto c)$ est vraie pour une succession d'états si a1 est certain que a2 a le profil c étant donné cet historique,

Une formule $\langle A\rangle \mathcal{N}\,\varphi$ est vraie si l'agent A a une stratégie pour que <p soit vraie dans le prochain état du système, quel que soit la stratégie des autres agents,

Une formule $\langle A\rangle\varphi_1\,\mathcal{U}\,\varphi_2$ est vraie dans un état si A a une stratégie pour que $\varphi_1$ soit vraie dans tous les futurs états jusqu'à ce que $\varphi_2$ soit vraie.

Les opérateurs booléens ∧ (« et »), ∨ (« ou »), ⇒ (« implique »), ¬ (« négation ») s'interprètent de façon classique.

Le langage formel ainsi défini permet de spécifier l'objectif que doit remplir un leurre pour système informatique.

L'opérateur de connaissance permet notamment de spécifier des objectifs portant sur les capacités des agents, notamment de l'attaquant.

Ainsi, dans ce mode de réalisation, le langage formel CapATL se distingue du langage formel ATL par l'ajout de cet opérateur de connaissance ainsi que par la définition de formule d'affectation de capacité, <p.

On peut ainsi spécifier un objectif du type fourni par l'exemple suivant :

$$I \vDash \langle D\rangle(\neg hacked)\mathcal{U}\left(\neg hacked \wedge \neg\mathcal{K}_{cap}^{A}(D \mapsto honeypot)\right.$$

$$\left.\wedge\left(win \Rightarrow \left(\mathcal{K}_{cap}^{D}(A \mapsto att1) \vee \mathcal{K}_{cap}^{D}(A \mapsto att2) \vee \mathcal{K}_{cap}^{D}(A \mapsto att3)\right)\right)\right)$$

Cet objectif vise à s'assurer que, partant d'un état initial « I », le leurre, ou défendeur, peut détecter le profil de l'attaquant A, que l'attaquant ne détermine que le système n'est pas réel, et que le leurre n'est pas compromis (ou « hacked » en anglais).

L'étiquette « win » désigne un état où l'attaquant pense l'emporter (par exemple il accède à un fichier de faux mots de passes). En effet on peut considérer que l'attaquant va alors arrêter son attaque, et donc on veut avoir déjà réussi à l'identifier à ce moment (c'est-à-dire avoir obtenu la connaissance des capacités att1, att2, att3 de l'attaquant).

Le défendeur a deux capacités : « real » et « honeypot ». Le défendeur sait qu'il possède la capacité « honeypot » (leurre), mais l'attaquant doit savoir qu'il a la capacité « real » (système réel). Autrement dit, l'attaquant ne doit jamais avoir conscience qu'il interagit avec un leurre.

Une fois effectuées l'étape S1 de modélisation du comportement adaptatif du leurre sous la forme d'un graphe d'états, et l'étape S2 de spécification S2 de l'objectif sous la forme d'une équation formelle, le procédé proposé comporte une étape S3 de vérification de l'adéquation du leurre informatique déployé sur le système informatique vis-à-vis d'un objectif, sur la base du graphe d'états et de l'équation formelle.

Autrement dit, le problème de la vérification de l'adéquation d'un leurre informatique vis-à-vis d'un objectif est ramené à un problème de mise en correspondance d'un graphe d'états et d'une équation formelle.

Différents algorithmes peuvent permettre de vérifier si une telle formule logique (selon la logique CapATL par exemple) est vérifiée par un modèle de leurre.

Cette vérification peut comprendre la détermination d'une stratégie optimale du leurre dont le critère d'optimalité peut être exprimé de façon concise et flexible, à travers une formule logique.

Ainsi, les problèmes techniques sont résolus dès la conception du leurre à travers les étapes suivantes :

Etape S1 : L'administrateur décrit une proposition de conception du leurre
Etape S2 : l'administrateur décrit les garanties que doit satisfaire la stratégie d'adaptation du leurre, et,
Etape S3 : l'algorithme prend en entrée ces deux descriptions et renvoie une stratégie garantie si elle existe. Sinon, il peut demander ou suggérer à l'administrateur des changements de conception du leurre.

Puis, dans une étape S4, une fois une conception satisfaisante obtenue, le leurre correspondant peut être déployé.

L'administrateur a ainsi l'assurance qu'il répondra bien à l'objectif décrit. Il peut ainsi notamment éviter une longue phase de tests du comportement du leurre avec des schémas prédéfinis d'attaque, une telle approche étant empirique et non exhaustive, et donc non satisfaisante puisqu'apportant aucune garantie.

L'algorithme de vérification peut se baser sur l'algorithme décrit dans l'article « Alternating-Time Temporal Logic » précédemment cité, plus particulièrement dans la section 4, intitulée « Symbolic Model Checking ».

Selon un mode de réalisation, cette étape S3 peut ainsi se baser sur algorithme de programmation dynamique et sur des techniques de points fixes afin d'implémenter les aspects temporels de la formulation logique de l'objectif (c'est-à-dire, par exemple, les fonctions $\mathcal{N}$, $\mathcal{U}$, $\mathcal{R}$).

Une grande différence est que l'algorithme d'ATL construit l'ensemble des états (du modèle) satisfaisant des sous-formules, alors que l'algorithme proposé selon un mode de réalisation construit des ensembles de « pointed knowledge » (ou « connaissances pointées » en français). Ces connaissances pointées sont représentatives de l'état du modèle et des connaissances de chaque agent sur les capacités des autres agents.

Par ailleurs, il y a une subtilité du fait que la stratégie doit être subjective : c'est-à-dire qu'un agent ne peut pas changer de stratégie en fonction de la connaissance des autres agents puisqu'une connaissance est individuelle (c'est-à-dire non partagée entre les différents agents).

Selon un mode de réalisation, l'algorithme repose sur l'idée de construire, pour chaque sous-formule en débutant par les sous-formules les plus profondes, l'ensemble d'états qui vérifie la sous-formule.

Ensuite, chaque opérateur de la logique (par exemple l'opérateur AND entre $\varphi_1$ et $\varphi_2$) correspond à des opérations sur ces ensembles d'états qui vérifient les sous-formules ($[\varphi_1 \wedge \varphi_2] = [\varphi_1] \cap [\varphi_2]$, où $[\varphi]$ est l'ensemble d'états qui vérifient $\varphi$).

Par exemple, dans la formule donnée en exemple précédemment, on peut débuter l'algorithme par les sous-formules les plus profondes : $\mathcal{K}_{cap}^{D}(A \mapsto att1)$, $\mathcal{K}_{cap}^{D}(A \mapsto att2)$ et $\vee \mathcal{K}_{cap}^{D}(A \mapsto att3)$

Chacune de ces sous-formules peut être évaluée.

On peut alors considérer la sous-formule de rang immédiatement supérieur, qui est la combinaison de ces sous-formules par l'opérateur « ou » logique, c'est-à-dire :

$$\mathcal{K}_{cap}^{D}(A \mapsto att1) \vee \mathcal{K}_{cap}^{D}(A \mapsto att2) \vee \mathcal{K}_{cap}^{D}(A \mapsto att3)$$

On peut ainsi évaluer la sous-formule

$$win \Rightarrow \left( \mathcal{K}_{cap}^{D}(A \mapsto att1) \vee \mathcal{K}_{cap}^{D}(A \mapsto att2) \vee \mathcal{K}_{cap}^{D}(A \mapsto att3) \right)$$, et ainsi de suite.

On peut ainsi remonter jusqu'à la formule complète. Les opérateurs les plus difficiles à vérifier sont le « until » et le « release » (décrits précédemment).

Pour les résoudre, on remarque, dans le cas du « until » dans ATL, que <Y>φ1 until φ$_2$ = φ$_2$ ∨ <Y>next(<Y> φ$_1$ until φ$_2$).

Et ainsi on dit que le « until » doit vérifier [<Y> φ$_1$ until φ$_2$] = [φ$_2$]∪Pre([<Y> φ$_1$ until φ$_2$], où Pre(S) donne l'ensemble d'états où Y peut forcer le prochain état à être parmi S.

Il s'agit là d'une équation de point fixe, et on peut donc faire des itérations jusqu'au point fixe.

Dans la mise en oeuvre proposée, les états φ ne sont pas seulement des états du modèle mais une capture de l'état du modèle et de la connaissance de chaque joueur à un instant donné, formant des « connaissances pointées » (ou « pointed knowledge »). On fait ensuite notre point fixe sur des ensembles de pointed knowledge.

Bien entendu, la présente invention n'est pas limitée aux exemples et au mode de réalisation décrits et représentés, mais elle est susceptible de nombreuses variantes accessibles à l'homme de l'art.

## Revendications

1. Procédé de vérification de l'adéquation d'un leurre informatique vis-à-vis d'un objectif, pour son déploiement sur un système informatique, ledit leurre étant prévu pour adopter un comportement adaptatif en fonction d'un attaquant dudit système informatique, et ledit procédé comportant :

   - une étape de modélisation (S1) dudit comportement adaptatif dudit leurre sous la forme d'un graphe d'états,
   - une étape de spécification (S2) dudit objectif, sous la forme d'une équation formelle,
   - une étape de vérification (S3) sur la base dudit graphe d'états et de ladite équation formelle.

2. Procédé selon la revendication 1, dans lequel ledit graphe d'états a pour transitions des couples d'actions, chaque couple d'actions comprenant une première action représentative du comportement dudit attaquant vis-à-vis dudit leurre, l'autre action représentative d'un comportement dudit leurre.

3. Procédé selon la revendication précédente dans lequel ladite équation formelle est exprimée selon un langage formel de type logique temporelle à temps alterné, ATL.

4. Procédé selon la revendication précédente dans lequel ledit langage formel est adapté pour exprimer des capacités dudit attaquant.

5. Procédé selon la revendication précédente, dans lequel ladite étape de vérification (S3) se base sur un algorithme de programmation dynamique considérant des sous-formules de ladite équation formelle et se basant sur des connaissances pointées représentatives d'un état dudit graphe d'états et des connaissances dudit attaquant, respectivement défendeur, sur les capacités dudit défendeur, respectivement attaquant.

6. Procédé selon l'une des revendications précédentes, comportant une étape (S4) de déploiement dudit leurre.

7. Procédé selon l'une des revendications 4 à 6, dans lequel ledit langage formel obéit à la grammaire suivante :

$$\phi ::= \ell \mid \mathcal{K}_{cap}^{a}(\varphi) \mid \neg\phi \mid \phi \wedge \phi \mid \langle Y \rangle \psi$$

$$\psi ::= \mathcal{N}\phi \mid \phi\mathcal{U}\phi \mid \phi\mathcal{R}\phi$$

$$\varphi ::= a \mapsto c \mid \neg\varphi \mid \varphi \wedge \varphi$$

dans laquelle $\ell$ est une proposition atomique, $a$ est un agent Y est une coalition d'agents, lesdits agents pouvant être ledit attaquant ou ledit défendeur, c est une capacité, $\langle . \rangle$ est un opérateur stratégique, $\mathcal{N}$, $\mathcal{U}$, $\mathcal{R}$ sont les opérateurs

temporels, respectivement « next », « until » et « release » et $\mathcal{K}_{cap}^{a}(\varphi)$ est un opérateur de connaissance appliqué à une propriété <p sur les capacités desdits agents.

8. Programme d'ordinateur comportant des instructions pour mettre en oeuvre un procédé selon l'une des revendications précédentes lorsque ledit programme est exécuté par un processeur.

9. Moyens de stockage **caractérisés en ce qu'**ils stockent un programme d'ordinateur comprenant des instructions pour mettre en oeuvre le procédé selon l'une des revendications 1 à 7, lorsque ledit programme est exécuté par un processeur.

**Revendications modifiées conformément à la règle 137(2) CBE.**

1. Procédé de vérification de l'adéquation d'un leurre informatique vis-à-vis d'un objectif, pour son déploiement sur un système informatique, ledit leurre étant prévu pour adopter un comportement adaptatif en fonction d'un attaquant dudit système informatique, et ledit procédé comportant :

   - une étape de modélisation (S1) dudit comportement adaptatif dudit leurre sous la forme d'un graphe d'états,
   - une étape de spécification (S2) dudit objectif, sous la forme d'une équation formelle exprimée selon un langage formel de type logique temporelle à temps alterné, ATL, adapté pour exprimer des capacités dudit attaquant,
   - une étape de vérification (S3) sur la base dudit graphe d'états et de ladite équation formelle.

2. Procédé selon la revendication 1, dans lequel ledit graphe d'états a pour transitions des couples d'actions, chaque couple d'actions comprenant une première action représentative du comportement dudit attaquant vis-à-vis dudit leurre, l'autre action représentative d'un comportement dudit leurre.

3. Procédé selon l'une des revendications précédentes, dans lequel ledit objectif comprend la détermination des capacités dudit attaquant.

4. Procédé selon l'une des revendications précédentes, dans lequel ladite étape de vérification (S3) se base sur un algorithme de programmation dynamique considérant des sous-formules de ladite équation formelle et se basant sur des connaissances pointées représentatives d'un état dudit graphe d'états et des connaissances dudit attaquant, respectivement défendeur, sur les capacités dudit défendeur, respectivement attaquant.

5. Procédé selon l'une des revendications précédentes, comportant une étape (S4) de déploiement dudit leurre.

6. Procédé selon l'une des revendications précédentes, dans lequel ledit langage formel obéit à la grammaire suivante :

$$\phi := = \ell \mid \mathcal{K}_{cap}^{a}(\varphi) \mid \neg\phi \mid \phi \wedge \phi \mid \langle Y \rangle \psi$$
$$\psi := = \mathcal{N}\phi \mid \phi\mathcal{U}\phi \mid \phi\mathcal{R}\phi$$
$$\varphi := = a \mapsto c \mid \neg\varphi \mid \varphi \wedge \varphi$$

dans laquelle $\ell$ est une proposition atomique, $a$ est un agent Y est une coalition d'agents, lesdits agents pouvant être ledit attaquant ou ledit défendeur, c est une capacité, $\langle . \rangle$ est un opérateur stratégique, $\mathcal{N}, \mathcal{U}, \mathcal{R}$ sont les opérateurs temporels, respectivement « next », « until » et « release » et $\mathcal{K}_{cap}^{a}(\varphi)$ est un opérateur de connaissance appliqué à une propriété $\varphi$ sur les capacités desdits agents.

7. Programme d'ordinateur comportant des instructions pour mettre en oeuvre un procédé selon l'une des revendications précédentes lorsque ledit programme est exécuté par un processeur.

8. Moyens de stockage **caractérisés en ce qu'**ils stockent un programme d'ordinateur comprenant des instructions pour mettre en oeuvre le procédé selon l'une des revendications 1 à 6, lorsque ledit programme est exécuté par un processeur.

**Fig. 1**

**Fig. 2**

**Fig. 3**

Fig. 4

## EP 4 488 860 A1

**Europäisches Patentamt**
**European Patent Office**
**Office européen des brevets**

## RAPPORT DE RECHERCHE EUROPEENNE

Numéro de la demande

EP 23 18 4219

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | KULKARNI ABHISHEK N ET AL: "Decoy Allocation Games on Graphs with Temporal Logic Objectives", 28 octobre 2020 (2020-10-28), TOPICS IN CRYPTOLOGY – CT-RSA 2020 : THE CRYPTOGRAPHERS' TRACK AT THE RSA CONFERENCE 2020, SAN FRANCISCO, CA, USA, FEBRUARY 24-28, 2020, PAGE(S) 168 – 187, XP047589581, * abrégé * * Section 1, Introduction * * Section 2.1, Attack-Defend Games on Graph * * Section 2.2, Forumlating the Decoy Allocation Problem * ----- | 1-9 | INV. G06F21/55 H04L9/40 |
| A,D | RAJEEV ALUR ET AL: "Alternating-time temporal logic", JOURNAL OF THE ASSOCIATION FOR COMPUTING MACHINERY, ACM, NEW YORK, NY, US, vol. 49, no. 5, 1 septembre 2002 (2002-09-01), pages 672-713, XP058303571, ISSN: 0004-5411, DOI: 10.1145/585265.585270 * abrégé * * Section 1, Introduction * * Section 2, Concurrent Games Structures * ----- | 1-9 | |
| A | US 2020/183820 A1 (HEBERT CEDRIC [FR] ET AL) 11 juin 2020 (2020-06-11) * abrégé * * alinéas [0002] – [0009] * * alinéas [0016] – [0031] * * revendications 1-21 * * figures 1-4 * ----- | 1-9 | DOMAINES TECHNIQUES RECHERCHES (IPC) G06F H04L |

Le présent rapport a été établi pour toutes les revendications

| Lieu de la recherche | Date d'achèvement de la recherche | Examinateur |
|---|---|---|
| Munich | 19 décembre 2023 | Bichler, Marc |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03.82 (P04C02)

14

**EP 4 488 860 A1**

## ANNEXE AU RAPPORT DE RECHERCHE EUROPEENNE
## RELATIF A LA DEMANDE DE BREVET EUROPEEN NO.

EP 23 18 4219

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-12-2023

| Document brevet cité au rapport de recherche | Date de publication | Membre(s) de la famille de brevet(s) | Date de publication |
|---|---|---|---|
| US 2020183820 A1 | 11-06-2020 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DANIEL FRAUNHOLZ** ; **MARC ZIMMERMANN** ; **HANS D. SCHOTTEN**. An adaptive honeypot configuration, deployment and maintenance strategy. *19th International Conférence on Advanced Communication Technology (ICACT)*, 2017, 53-57
- **ADRIAN PAUNA** ; **ION BICA**. RASSH - Reinforced Adaptive SSH honeypot. *14th International Conférence on Communications (COMM)*, 2014, 1-6
- **GÉRARD WAGENER et al.** *Heliza : talking dirty to the attacker*, 2011, vol. 7.3, 221-222
- **D'AMIR PNUELI**. The temporal logic of programs. *18th Annual Symposium on Foundations of Computer Science*, 1977, 46-57
- **D'ALUR, R.** ; **HENZINGER TH.A.** ; **KUPFERMAN O.** Alternating-time Temporal Logic. *J. ACM*, 2002, vol. 49 (5)